# EUROPEAN PATENT APPLICATION

(11) **EP 4 841 566 A1**
(43) Date of publication of application: **18.11.2026**
(21) Application number: 26172465.2
(22) Date of filing: 15.04.2026
(51) Int. Cl.: G06T 7/50

(54) **IMPROVED DETERMINATION OF DEPTH MAP FOR A ROBOTIC LAWNMOWER**

(30) Priority: 16.05.2025 SE 2550485
(71) Applicant: Husqvarna AB, 561 82 Huskvarna (SE)
(72) Inventor: Dahan, Odi, 561 82 Huskvarna (SE); Pikalov, Simon, 561 82 Huskvarna (SE)

(57) **Abstract**

A method for use in a robotic lawnmower system comprising a robotic lawnmower (100), and wherein the method comprises determining a scale-consistent depth map through applying a depth map model on the first capture, wherein the depth map model has been trained on a loss function, wherein the loss function involves a photometric Loss, L_{photometric}, which measures the photometric consistency between images and a geometry loss, L_{geometry}, which ensures geometric consistency between different viewpoints, wherein the total loss is L_{photometric} + L_{geometry}. Optionally the loss function further involves a smoothness loss, Lₛₘₒₒₜₕₙₑₛₛ, which enforces smoothness in depth or disparity prediction, wherein the total loss is L_{photometric} + L_{geometry} + Lₛₘₒₒₜₕₙₑₛₛ.

## Description

### TECHNICAL FIELD

This application relates to a robotic lawnmower and a method for providing depth maps, and in particular to a robotic lawnmower and a method for providing a depth map using a mono camera.

### BACKGROUND

Automated or robotic lawnmowers are becoming increasingly more popular and so is the use of the robotic lawnmower in various types of operational areas.

Some robotic lawnmowers utilize visual navigation which uses cameras to perceive the environment, enabling obstacle detection, path planning, and boundary recognition. Advanced models use computer vision and AI to identify grass, avoid obstacles, and map the mowing area. Some rely on depth cameras or stereo vision for 3D scene understanding. However, such depth cameras and stereo cameras are relatively expensive. Supplemental sensors may be utilized (such as InfraRed or LIDAR) to determine distances, but such sensors are also relatively expensive.

Traditional approaches to estimate depth thus introduce challenges such as increased cost, complexity, and dependency on specialized hardware.

Monocular depth estimation using a single camera is a cost-effective and computationally efficient alternative. However, existing monocular methods often lack the robustness and precision needed for high-quality depth estimation, particularly in outdoor and dynamic environments. This poses challenges for robotic lawnmowers in tasks such as obstacle avoidance, localization, and simultaneous localization and mapping (SLAM).

Monocular depth estimation predicts the distance of each pixel in an image using only one camera. Various approaches have been developed to address the inherent challenges of this problem, typically producing one of three depth output types:
Relative depth methods generate depth values that are consistent within a single frame but lack alignment to a fixed real-world scale. They allow comparisons between points (e.g., determining which is closer or farther) but do not provide absolute measurements in meters or centimeters.

Scale-consistent models build on relative depth by ensuring consistency across multiple frames. This helps mitigate the classic "scale ambiguity" in monocular setups, so an object appearing at a certain depth in one frame will maintain that scale in subsequent frames. However, these methods still do not yield absolute metric distances.

Metric depth approaches provide real-world distances (e.g., in meters) for every pixel. Unlike the other methods, metric depth outputs can be directly applied in tasks requiring precise measurements, such as obstacle avoidance and environment mapping. Achieving this level of accuracy, however, is resource-intensive and depends on a reliable ground-truth signal.

Thus, there is a need for an improved manner of providing visual navigation, specifically using a mono camera, at a lower cost.

### SUMMARY

It is therefore an object of the teachings of this application to overcome or at least reduce those problems by providing a robotic lawnmower system comprising a robotic lawnmower arranged to operate in an outdoor operational area, and the robotic lawnmower comprising a mono camera, a controller, a memory carrying computer-readable instructions that when loaded into and executed by the controller configures the controller to receive a capture, determine a scale-consistent depth map through applying a depth map model on the first capture, wherein the depth map model has been trained on a loss function, wherein the loss function involves a photometric Loss, L_{photometric}, which measures the photometric consistency between images and a geometry loss, L_{geometry}, which ensures geometric consistency between different viewpoints, wherein the total loss is L_{photometric} + L_{geometry}.

In some embodiments the loss function further includes a smoothness loss, Lₛₘₒₒₜₕₙₑₛₛ, which enforces smoothness in depth or disparity prediction, wherein the total loss is L_{photometric} + L_{geometry} + Lₛₘₒₒₜₕₙₑₛₛ.

It is also an object of the teachings of this application to overcome the problems by providing a method for use in a robotic lawnmower system comprising a robotic lawnmower arranged to operate in an outdoor operational area, the robotic lawnmower comprising a mono camera, and wherein the method comprises receiving a capture (C1), determining a scale-consistent depth map through applying a depth map model on the first capture, wherein the depth map model has been trained on a loss function, wherein the loss function involves a photometric Loss, L_{photometric}, which measures the photometric consistency between images and a geometry loss, L_{geometry}, which ensures geometric consistency between different viewpoints, wherein the total loss is L_{photometric} + L_{geometry} .

In some embodiments the loss function further involves a smoothness loss, Lₛₘₒₒₜₕₙₑₛₛ, which enforces smoothness in depth or disparity prediction, wherein the total loss is L_{photometric} + L_{geometry} + Lₛₘₒₒₜₕₙₑₛₛ.

It is also an object of the teachings of this application to overcome the problems by providing a method for for training a depth map model to provide a scale-consistent depth map for use in a robotic lawnmower system comprising a robotic lawnmower having a mono camera, and wherein the method comprises receiving a first capture (C1) at a first time (T1) and a first pose (P1), receiving a second capture (C2) at a second time (T2) and a second pose (P2), determining a first depth map (D1) for the first capture (C1), determining a second depth map (D2) for the second capture (C2), determining a difference in positions/poses and then determining a loss based on the first depth map (D1), the second depth map (D2), and the difference in poses, wherein wherein the loss function involves a photometric Loss, L_{photometric}, which measures the photometric consistency between images and a geometry loss, L_{geometry}, which ensures geometric consistency between different viewpoints, a smoothness loss, Lₛₘₒₒₜₕₙₑₛₛ, which enforces smoothness in depth or disparity prediction, wherein the total loss is L_{photometric} + L_{geometry}.

In some embodiments the loss function further involves a smoothness loss, Lₛₘₒₒₜₕₙₑₛₛ, which enforces smoothness in depth or disparity prediction, wherein the total loss is L_{photometric} + L_{geometry} + Lₛₘₒₒₜₕₙₑₛₛ.

Further embodiments and aspects are as in the attached patent claims and as discussed in the detailed description.

The teachings herein introduces several groundbreaking advancements in monocular depth estimation, designed to enhance its applicability and performance in cost-sensitive and practical scenarios:
Cost-Efficient Monocular Depth Estimation for Lawn Mowers: By employing monocular depth estimation instead of relying on additional sensors such as stereo cameras or LiDAR, this solution significantly reduces hardware costs for autonomous lawn mowers. These savings enable the production of affordable robotic systems that maintain reliable depth perception, ensuring obstacle avoidance, efficient navigation, and high-quality lawn maintenance.

Transforming Scale-Consistent Depth to Metric Depth Using Calibration Techniques: To bridge the gap between relative depth scales and metric precision, the system incorporates calibration methods such as ArUco markers or other reference-based techniques. These methods enable the model to align its depth predictions with real-world measurements, making it suitable for tasks requiring metric accuracy, such as precise localization, mapping, and interaction with the environment.

Enhancing SQL Depth with Scale Consistency: The innovation extends the SQL (Self Query Layer) depth framework by incorporating scale consistency mechanisms. By ensuring consistent depth predictions across sequences, this approach resolves issues related to scale ambiguity and enables the model to function effectively in dynamic and diverse environments. This enhancement improves depth reliability for applications such as simultaneous localization and mapping (SLAM) and navigation in unstructured terrains.

Other features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention will be described in further detail under reference to the accompanying drawings in which:
Figure 1 shows a schematic view of the components of an example of a robotic lawnmower according to some example embodiments of the teachings herein;
Figure 2 shows a schematic view of a robotic lawnmower system according to some example embodiments of the teachings herein;
Figure 3 shows a schematic view of an image capture and a corresponding depth map;
Figure 4A shows a schematic view of a robotic lawnmower capturing images according to some example embodiments of the teachings herein;
Figure 4B shows a schematic view of a robotic lawnmower capturing images according to some example embodiments of the teachings herein;
Figure 5 shows a schematic view of a software model for a robotic lawnmower according to some example embodiments of the teachings herein;
Figure 6A shows a corresponding flowchart for a method for operating a robotic lawnmower according to some example embodiments of the teachings herein; and
Figure 6B shows a corresponding flowchart for a method for training a model according to some example embodiments of the teachings herein..

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein. Like reference numbers refer to like elements throughout.

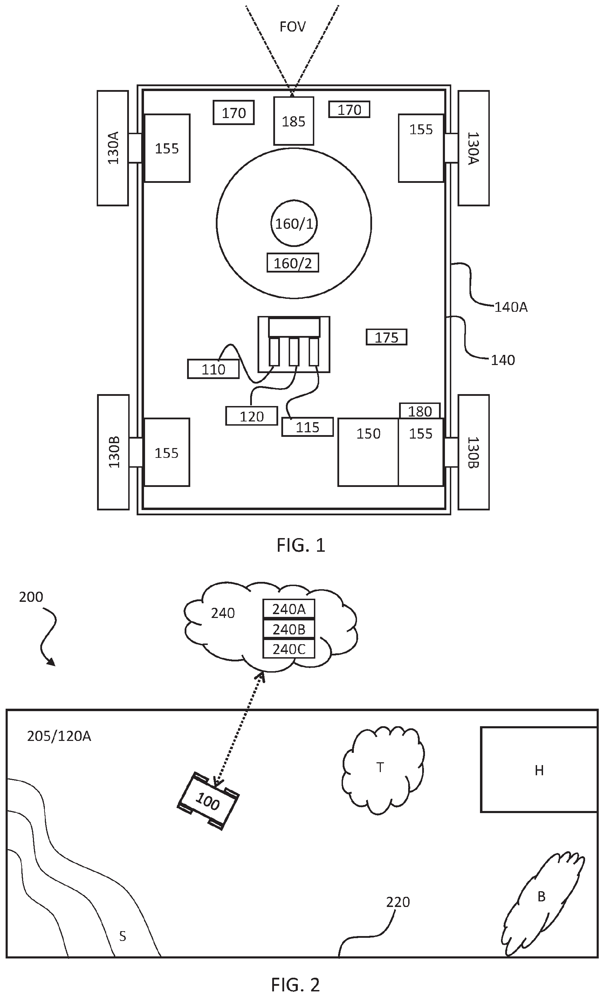

Figure 1A shows a schematic overview of a robotic lawnmower 100. The robotic lawnmower 100 may be a multi-chassis type or a mono-chassis type (as in figure 1A). A multi-chassis type comprises more than one main body parts that are movable with respect to one another. A mono-chassis type comprises only one main body part.

It should be noted that robotic lawnmower may be of different sizes, where the size ranges from merely a few decimetres for small garden robots, to even more than 1 meter for large robots arranged to service for example airfields.

It should also be noted that the robotic lawnmower is a self-propelled robotic lawnmower, capable of autonomous navigation within an outdoor operational area, where the robotic lawnmower propels itself across or around the outdoor operational area in a pattern (random or predetermined).

The robotic lawnmower 100 has a main body part 140, possibly comprising a chassis 140 and an outer shell 140A, and a plurality of wheels 130 (in this example four wheels 130, but other number of wheels are also possible, such as three or six).

The main body part 140 substantially houses all components of the robotic lawnmower 100. At least some of the wheels 130 are drivably connected to at least one electric motor 155 powered by a battery 150. It should be noted that even if the description herein is focused on electric motors, combustion engines may alternatively be used, possibly in combination with an electric motor. In the example of figure 1, each of the wheels 130 is connected to a common or to a respective electric motor 155 for driving the wheels 130 to navigate the robotic lawnmower 100 in different manners. The wheels, the motor 155 and possibly the battery 150 are thus examples of components making up a propulsion device. By controlling the motors 155, the propulsion device may be controlled to propel the robotic lawnmower 100 in a desired manner, and the propulsion device will therefore be seen as synonymous with the motor(s) 150. It should be noted that wheels 130 driven by electric motors is only one example of a propulsion system and other variants are possible such as caterpillar tracks.

The robotic lawnmower 100 also comprises a controller 110 and a computer readable storage medium or memory 120. The controller 110 may be implemented using instructions that enable hardware functionality, for example, by using executable computer program instructions in a general-purpose or special-purpose processor that may be stored on the memory 120 to be executed by such a processor. The controller 110 is configured to read instructions from the memory 120 and execute these instructions to control the operation of the robotic lawnmower 100 including, but not being limited to, the propulsion and navigation of the robotic lawnmower. The memory is thus an example of a computer-readable medium carrying computer instructions that when loaded into and executed by a controller of a robotic lawnmower enables the robotic lawnmower to implement the method according to herein.

The controller 110 in combination with the electric motor 155 and the wheels 130 forms the base of a navigation system (possibly comprising further components) for the robotic lawnmower, enabling it to be self-propelled as discussed.

The controller 110 may be implemented using any suitable, available processor or Programmable Logic Circuit (PLC). The memory 120 may be implemented using any commonly known technology for computer-readable memories such as ROM, FLASH, DDR, or some other memory technology.

The robotic lawnmower 100 is further arranged with a wireless communication interface 115 for communicating with other devices, such as a server, a personal computer, a smartphone, the charging station, and/or other robotic lawnmowers. Examples of such wireless communication devices are Bluetooth^{®}, WiFi^{®} (IEEE802.11b), Global System Mobile (GSM) and LTE (Long Term Evolution), to name a few. The robotic lawnmower 100 may be arranged to communicate with a user equipment (not shown but will be regarded as being an example of a server, as an example of a connected device) as discussed in relation to figure 2 below for providing information regarding status, location, and progress of operation to the user equipment as well as receiving commands or settings from the user equipment. Alternatively or additionally, the robotic lawnmower 100 may be arranged to communicate with a server (referenced 240 in figure 2) for providing information regarding status, location, and progress of operation as well as receiving commands or settings.

The robotic lawnmower 100 also comprises a work tool 160, which in the example of the robotic lawnmower 100 is a grass cutting device 160, such as a rotating blade 160/2 driven by a cutter motor 160/1.

For enabling the robotic lawnmower 100 to navigate with reference to a wire, such as a boundary wire or a guide wire, emitting a magnetic field caused by a control signal transmitted through the wire, the robotic lawnmower 100 is, in some embodiments, configured to have at least one magnetic field sensor 170 arranged to detect the magnetic field and for detecting the wire and/or for receiving (and possibly also sending) information to/from a signal generator. In some embodiments, such a magnetic boundary is used to provide a border (not shown explicitly in figure 2, but deemed to be included in the boundary 220) enclosing an outdoor operational area (referenced 205 in figure 2).

In some embodiments the robotic lawnmower 100 comprises a satellite signal navigation sensor 175 configured to provide navigational information (such as position) based on receiving one or more signals from a satellite - possibly in combination with receiving a signal from a base station. In some embodiments the satellite navigation sensor is a GPS (Global Positioning System) device or other Global Navigation Satellite System (GNSS) device. In some embodiments the satellite navigation sensor 175 is a RTK sensor. This enables the robotic lawnmower to operate in an outdoor operational area bounded by a virtual border (not shown explicitly in figure 2 but deemed to be included in the boundary 220 irrespective whether a physical boundary is used or not).

The robotic lawnmower 100 also comprises deduced reckoning sensors 180. The deduced reckoning sensors may be odometers, accelerometers or other deduced reckoning sensors.

In some embodiments, the deduced reckoning sensors are comprised in the propulsion device, wherein a deduced reckoning navigation may be provided by knowing the current supplied to a motor and the time the current is supplied, which will give an indication of the speed and thereby distance for the corresponding wheel.

The deduced reckoning sensors 180, especially in combination with the visual odometry sensor 185, enables the robotic lawnmower to operate according to a map of the outdoor operational area. In some such embodiments, the navigation is based on SLAM, and in some embodiments, where a visual odometry sensor (such as a camera 185) is utilized, the navigation is based on V-SLAM.

In some embodiments, the robotic lawnmower comprises one or more image sensors 185. At least one of the image sensors 185 is a mono-camera 185, wherein mono relates to a camera having a single Field-Of-View (FOV) in contrast to a stereo camera. In some embodiments, the robotic lawnmower comprises a single image sensor being a mono camera 185. Such cameras have the benefit of being cheap. However, they are traditionally unable to determine depth.

In some embodiments, the image sensor 185 is comprised in or connected to the deduced reckoning sensors 180, then (additionally) operating as a visual odometery sensor.

The robotic lawnmower 100 is in some embodiments arranged to operate according to a map application (indicated in figure 2 and referenced 120A) representing one or more operational areas (and possibly the surroundings of the outdoor operational area(s)) as well as features of the outdoor operational area(s) stored in the memory 120 of the robotic lawnmower 100. In some embodiments, the map is also or alternatively stored in the memory of a server (referenced 240 in figure 2). The map application may be generated or supplemented as the robotic lawnmower 100 operates or otherwise moves around in the outdoor operational area. In some embodiments, the map application is downloaded, possibly from the server. In some embodiments, the map application also includes one or more transport areas. The robotic lawnmower 100 is arranged to navigate according to the map based on the deduced reckoning sensors 180.

In some embodiments the robotic lawnmower is arranged or configured to traverse and operate in outdoor operational areas that are not essentially flat, but contain terrain that is of varying altitude, such as undulating, comprising hills or slopes or such. The ground of such terrain is not flat and it is not straightforward how to determine an angle between a sensor mounted on the robotic lawnmower and the ground. The robotic lawnmower is also or alternatively arranged or configured to traverse and operate in an outdoor operational area that contains obstacles that are not easily discerned from the ground. Examples of such are grass or moss-covered rocks, roots or other obstacles that are close to ground and of a similar colour or texture as the ground.

The robotic lawnmower is also or alternatively arranged or configured to traverse and operate in an outdoor operational area that contains obstacles that are overhanging, i.e. obstacles that may not be detectable from the ground up, such as low hanging branches of trees or bushes. Such a garden is thus not simply a flat lawn to be mowed or similar, but an outdoor operational area of unpredictable structure and characteristics. The outdoor operational area exemplified with referenced to figure 2, may thus be such a non-uniform operational area as disclosed in this paragraph that the robotic lawnmower is arranged to traverse and/or operate in.

Figure 2 shows a robotic lawnmower system 200 in some embodiments. The schematic view is not to scale. The robotic lawnmower system 200 comprises one or more robotic lawnmowers 100 according to the teachings herein arranged to operate in one or more outdoor operational areas 205 possibly bounded by a boundary 220. It should be noted that the outdoor operational area 205 shown in figure 2 is simplified for illustrative purposes.

The view of the outdoor operational area 205 is also intended to be an illustration or graphical representation of the map application 120A discussed in the above.

A server 240 is shown as an optional connected device for the robotic lawnmower 100 to communicate with - possibly for receiving maps or map updates. The server 240 comprises a controller 240A for controlling the operation of the server 240, a memory 240B for storing instructions and data relating to the operation of the server 240 and a communication interface 240C for enabling the server 240 to communicate with other entities, such as the robotic lawnmower 100, and/or a User Equipment such as a mobile phone. The controller, the memory and the communication interface may be of similar types as discussed in relation to figure 1 for the robotic lawnmower 100.

As is shown in figure 2 there may be obstacles such as houses (H), structures, trees (T), bushes (B) to mention a few examples in the outdoor operational area 205. In figure 2 such obstacles are indicated and referenced H (as in house). There may also be one or more irregularities in the surface of the outdoor operational area, which are exemplified in figure 2 as a slope S.

It should be noted that any processing may be done in any, some or all of the controller 110 of the robotic lawnmower 100 and/or the controller 240A of the server 240 and that the processing may also be done partially in one controller 110/240A for supplemental processing in the other controller 110/240A. This is indicated in figure 2A in that a dashed arrow is shown between the server 240 and the robotic lawnmower 100 for indicating that information may be passed freely between them for (partial) processing.

Returning to the camera 185, the camera 185 is utilized as a visual navigation sensor (possibly supplemented by other navigation devices, such as deduced reckoning sensors 180, satellite navigation sensors 175, and/or electromagnetic sensors 170) to enable visual navigation. Visual navigation uses the camera (and possibly additional sensors) to perceive the environment, enabling obstacle detection, path planning, and boundary recognition. Advanced models use computer vision and AI to identify grass, avoid obstacles, and map the mowing area.

The inventors have realized that by utilizing only a mono camera, possibly even without any of the supplemental sensors (such as deduced reckoning sensors 180, satellite navigation sensors 175, and/or electromagnetic sensors 170), in a novel and insightful manner, a simple solution is obtained for providing depth data even for a mono camera. The depth data is in some embodiments provided as a depth map which can be used for (visual) navigation as is known to a skilled person.

Depth maps are known, and requires little explanation, however a short explanation will be given herein for completeness sake. A depth image (or depth map) is a grayscale image where each pixel represents the distance between the camera and objects in the scene. Instead of storing colour information, it encodes depth values, with closer objects appearing lighter and farther objects appearing darker (or vice versa, depending on the encoding) and are traditionally generated using sensors like LiDAR, stereo cameras, or depth-sensing cameras like the Microsoft Kinect or Intel RealSense.

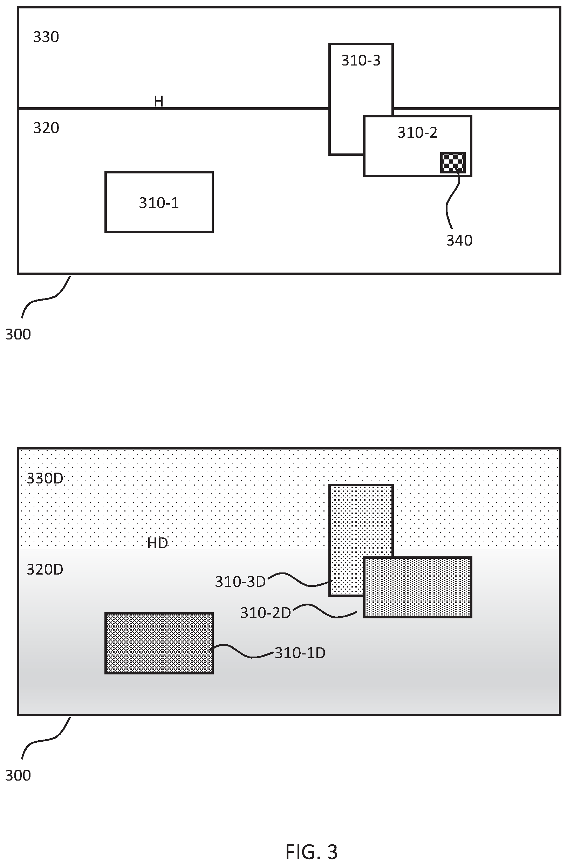

Figure 3 shows a schematic view of an image 300 and a corresponding depth map 300D of the image 300. The image is shown as a stylized view of a foreground 320 on which a number of objects 310 are captured. The image 300 also shows a visible horizon H and a background 330. As is illustrated in this example and highly schematic view, a first object 310-1 is closest to the camera capturing the image 300, a second object 310-2 is further away from the camera capturing the image 300 and partially hidden behind the second object 310-2 is a third object 310-3. As would be understood, the foreground 320 stretches from a short distance to the camera capturing the image 300 further into the image 300 away from the camera capturing the image 300. And, the background - even if technically also stretching - is at a distance significantly larger than the other objects 310, 320 in the image 300.

The corresponding depth map 300D of the image 300 does not explicitly show the objects 310 or the foreground 320, the horizon H and background 330, but as all these are at different distances, they will be represented with a different colour/greyscale (in the figure of 3, a different pattern is used to indicate different distances, where a fuller pattern indicates a shorter distance, and a more sparse pattern indicates a farther distance). As is illustrated, there is a first portion 310-1D indicating a close distance corresponding to the first object 310-1, a second portion 310-2D indicating a close distance corresponding to the second object 310-2 and a third portion 310-3D indicating a close distance corresponding to the third object 310-3. The foreground 320 gives rise to an area 320D where the colouring/shading gradually fades as the distance grows and the background 330 gives rise to an area 330D indicating a long distance wherein the horizon is simply the demarcation HD between these two areas 320D and 330D.

As the objects give rise to portions indicating different distances, the objects can be identified - or at least it can be identified that there is an object at that distance - which is utilized for navigating the robotic lawnmower.

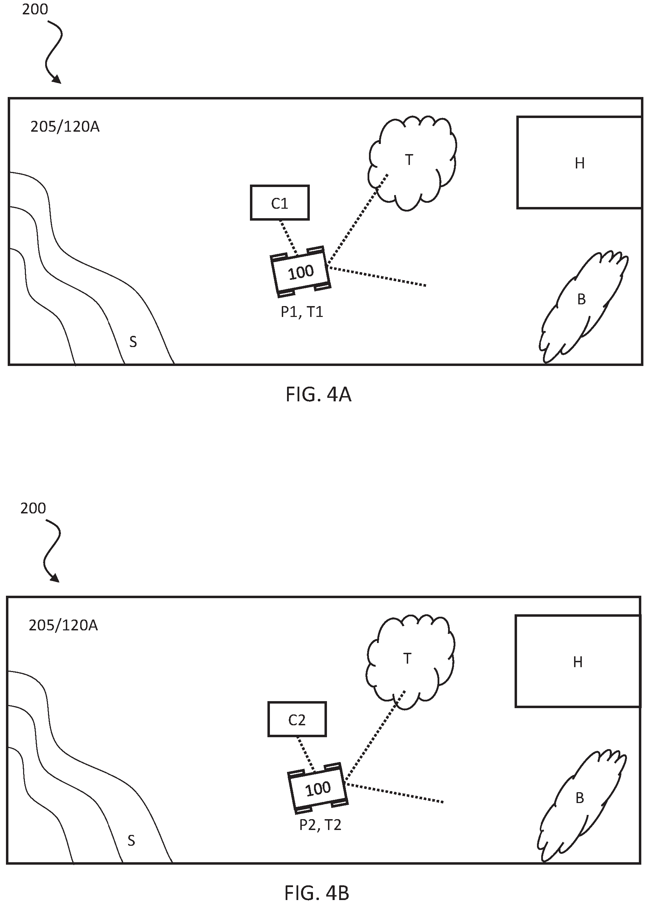

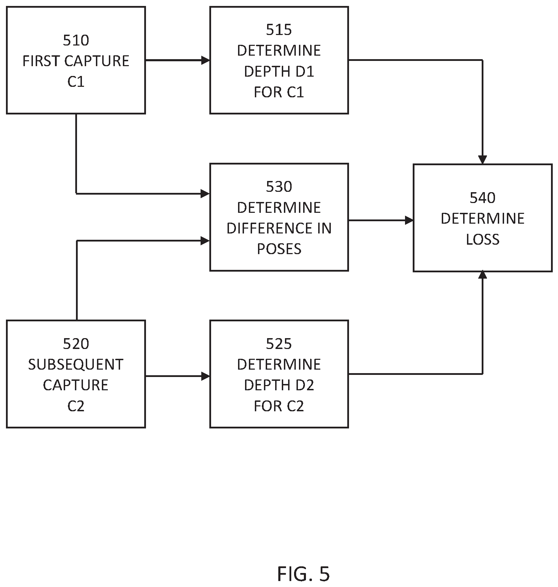

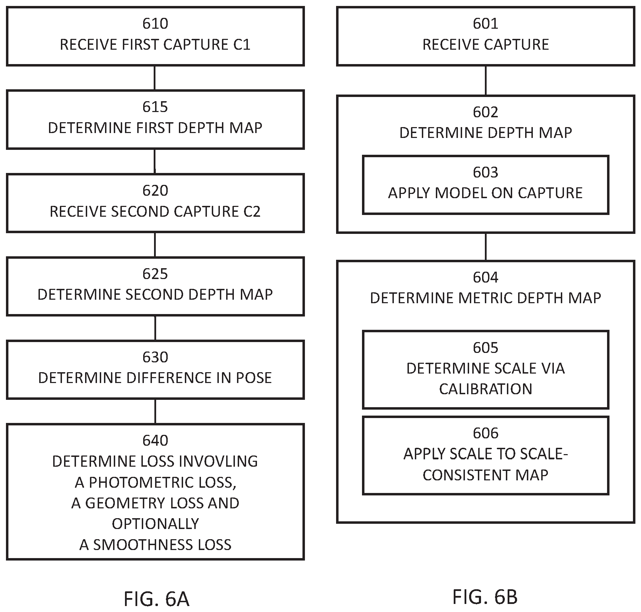

The functions of the present invention will now be discussed in great detail, providing several embodiments which may all be combined - unless alternatives to one another - while giving simultaneous reference to figures 4A, 4B, 5, 6A and 6B. Figures 4A and 4B shows a schematic view of a robotic lawnmower according to the teachings herein capturing a plurality (exemplified as two) image captures at different positions P1, P2 and at different times T1, T2. Figure 5 shows a schematic view of a software model utilized in the teachings herein. And figure 6A shows a schematic view of a general flowchart illustrating the main principles used during operation of a robotic lawnmower according to the teachings herein and figure 6B shows a schematic view of a general flowchart illustrating the main principles in the training of the AI model used during operation of a robotic lawnmower according to the teachings herein.

As mentioned, figures 4A and 4B shows a schematic view of the robotic lawnmower 100 capturing a stream of (exemplified as two) image captures at different positions P1, P2 and at different times T1, T2. In practice, a capture C1 may be a frame in a video stream captured by the mono camera 185, and a second (or subsequent) capture C2 may be a subsequent frame in the video stream. In some embodiments the second (or subsequent) capture C2 is the very next frame and in some embodiments the second (or subsequent) capture C2 is a frame further down the stream. As the robotic lawnmower 100 is designed to operate in the whole operational area 205, it will move around, and the first capture C1 and the second (or subsequent) capture C2 will thus be captured both at a different position (or at least a different pose) P2 and at a different time T2 from the position (or at least pose) P1 and time T1 at which the first capture C1 is captured. The view presented by the two captures C1, C2 will thus differ.

The inventors have realized that a similar series of images can be used in order to provide self-supervised training of an Artificial Intelligence model (hereafter model) for generating a depth map that is at a metric scale.

Figure 5 shows a general component view of a model layer as used herein. In some embodiments the model layer is based on utilizing a Self Query Layer.

Figure 5 and figure 6B show a general flow for the teachings according to herein, and specifically for training software (such as the artificial intelligence module) for generating the depth map that is at metric scale, where the training of the artificial intelligence module is provided 510, 610 a first capture C1 and a second capture C2. The first capture C1 is provided at a first pose(position) P1 and at a first time T1 and the second capture C2 is provided at a second pose(position) P2 and at a second time T2.

In some embodiments at least one of the captures undergoes preprocessing. The preprocessing may include normalization to handle varying lighting conditions, noise reduction using image filters, and/or frame alignment and calibration to improve consistency and accuracy. Specifically for training, the captures are preprocessed such that moving objects are masked dynamically during training, ensuring robust learning under dynamic scene assumptions.

A first depth map D1 is determined 515, 615 for the first capture C1 and a second depth map D2 is determined 525, 625 for the subsequent capture C2

A difference in positions/poses is also determined 530, 630 and a loss is then calculated or determined 540, 640 based on the first depth map D1, the second depth map D2, and the difference in poses.

The teachings herein integrate convolutional and transformer-based networks for feature extraction and scene-aware depth prediction and does this in part based on the loss function.

The loss function utilized herein is indeed novel and inspired, as it combines three different losses, namely:
A photometric Loss, L_{photometric}, which measures the photometric consistency between images. It ensures that the pixel intensities of corresponding points in different captures remain similar. In some embodiments, this loss can be implemented using metrics like L1 loss or structural similarity (SSIM). The Photometric loss can also be referred to as a self-cost volume which captures fine-grained geometric relationships, enabling precise scene detail recovery and encodes relative distances between points and objects within a latent space, effectively capturing a scene's intrinsic geometry from a single capture.

A geometry loss, L_{geometry}, which ensures geometric consistency between different viewpoints, enforcing that depth or disparity predictions align correctly across multiple views (i.e. captures). This also ensures scale-consistent depth predictions across frames, addressing traditional scale ambiguity issues.

A smoothness loss, Lₛₘₒₒₜₕₙₑₛₛ, which enforces smoothness in depth or disparity predictions, penalizing abrupt changes unless there are strong edges in the image. It ensures locally coherent depth maps and acts as a regularization term to refine depth predictions.

The total loss is thus determined as L_{photometric} + L_{geometry} + Lₛₘₒₒₜₕₙₑₛₛ. (possibly with weighting).

In some embodiments, the total loss is determined as L_{photometric} + L_{geometry} + (possibly with weighting), whereby the smoothness loss Lₛₘₒₒₜₕₙₑₛₛ is optional.

The teachings herein provide a Self-Supervised Method for determining depth maps with metric scales. Such a self-supervised method does not rely on explicit ground-truth depth labels. Instead, it exploits inherent constraints in video data-such as photometric or geometric consistency between frames-to learn depth.

This provides relative or scale-consistent depth predictions which may then be paired with an additional calibration (e.g., using ArUco markers as will be discussed below) to reach metric accuracy. The main advantage is that it reduces or eliminates the need for costly ground-truth collection, making it more flexible and scalable across diverse environments.

The photometric loss is, in some embodiments, determined as ${L}_{photometric} = \frac{1}{\left|V\right|} {\sum }_{p ∈ V} \left[λ⋅{\left|{I}_{a}\left(p\right)-{I}_{a}^{′}\left(p\right)\right|}_{1}+\left(1-λ\right)⋅\frac{1 - SSIM \left({I}_{a}\left(p\right),{I}_{a}^{′}\left(p\right)\right)}{2}\right]$ where
*p* - pixel in the image for which the photometric loss is computed
*Iₐ*(*p*) The pixel intensity value of the original image *Iₐ* at pixel p.
*I'ₐ*(*p*) The pixel intensity value of the warped image *I'ₐ* at pixel p.
λ - (hyperparameter) that controls the balance between *L_{photometric}* error and the structural similarity (*SSIM*) term. It lies in the range [0 - 1].
And where pixel coordinates are given through differentiable depth image-based rendering is utilized where ${p}_{s} ∼ {KT}_{t \to s} {D}_{t} \left({p}_{t}\right) {K}^{- 1} {p}_{t}$
***Pₛ*:** Pixel coordinates in the source view after projecting the 3D scene point from the target view into the source view using depth and camera transformation.
***Dₜ*(*pₜ***) : Depth value at pixel *pₜ* = (*u, v*) in the depth map of the target view, which represents the distance of the scene point from the camera.
***K*:** Intrinsic matrix of the camera, containing parameters such as focal length and principal point.
***K*⁻¹** :Inverse of the intrinsic matrix, which converts pixel coordinates from image space to normalized camera coordinates.
***T*_{*t*→*s*}** : Transformation matrix from the target view to the source view, combining rotation and translation.

The smoothness loss is, in some embodiments, determined as ${L}_{smoothness} = {\sum }_{p} \left[{e}^{- \left|∇I\left(p\right)\right|}⋅{\left|∇D\left(p\right)\right|}^{2}\right]$
*p* - pixel in the image for which the smoothness loss is computed
∇*I*(*p*) - The image intensity gradient at pixel p, representing the rate of change of brightness or colour in the image.
∇*D*(*p*) - The depth gradient at pixel p, representing the rate of change of the depth values in the depth map.
By combining these losses (photometric and smoothness) with geometry loss is novel and ingenious as it converts from relative depth to scale consistent depth.
The geometry loss is, in some embodiments, determined as ${L}_{geometry} = \frac{1}{\left|V\right|} {\sum }_{p ∈ V} \frac{\left|{D}_{a}^{b}\left(p\right)-{D}_{b}^{′}\left(p\right)\right|}{{D}_{a}^{b} \left(p\right) + {D}_{b}^{′} \left(p\right)}$
${D}_{a}^{b} \left(p\right)$ - This represents the reprojected depth from one view a to another view b at point. This is done in a similar way to the image reprojection.
${D}_{b}^{′} \left(p\right)$ - This is the direct depth prediction at point p in view b.

As mentioned above, the losses may be weighted through weights α, β, γ and the total loss becomes ${L}_{total} = α ⋅ {L}_{photometric} + β ⋅ {L}_{smoothness} + γ ⋅ {L}_{geometry}$ where the weights are determined during training.

As mentioned above, in some embodiments, the total loss is determined as L_{photometric} + L_{geometry} whereby the smoothness loss Lₛₘₒₒₜₕₙₑₛₛ is optional, and the total loss becomes ${L}_{total} = α ⋅ {L}_{photometric} + β ⋅ {L}_{smoothness}$

A scale-consistent depth map is thus achieved in thin simple but ingenious manner by combining the three losses. Even if the losses are known individually, the combination is ingenious and simple to implement.

During operation, the robotic lawnmower 100 receives a capture, which may be provided as a frame from a video stream captured by the mono camera 185 and applies the AI model to the capture (or series of captures - i.e. (a portion of) the video stream) to provide the scale-consistent depth map.

In order to assign a scale and thereby turn the scale-consistent depth map into a metric scale map, the inventors are proposing to use a marker for calibration. During calibration, the network computes the real-world dimensions of the marker in the scene and aligns the scale-consistent depth values with metric measurements. This process enhances the reliability of the system in real-world deployments by providing precise metric depth information. The marker 340 may be placed anywhere in the operational area 205. Returning to figure 3, the second object 310-2 is provided with a marker 340.

In some embodiments the marker 340 is some form of coded visual marker. In some embodiments the marker 340 is an ArUco marker, having known dimensions. The code on the marker 340 identifies which marker it is and/or the dimensions of the marker. Any marker can thus be used, so even if a supplied marker is lost, another marker can still be used. As is known, an ArUco marker is a type of fiducial marker used in computer vision for camera calibration, pose estimation, and augmented reality applications. It consists of a black-and-white grid pattern with a unique binary ID, making it easy to detect and identify in images. In some embodiments the marker 340 is an AprilTag are used, which are Similar to ArUco but designed for more robust detection under extreme lighting or motion blur.

In some embodiments the marker 340 is either the charging station itself or supplied on the charging station. Where it is supplied on the charging station, the marker may be a feature, such as a sticker (or other visual marking of) a company or model logo or name. Such markers will also have known dimensions.
The marker 340 is then registered by the controller of the robotic lawnmower (as through object recognition utilized on the first and/or second capture (or other captures in the video stream). By knowing the dimensions, the marker 340 can be used accurately estimating its rotation and translation relative to the camera using specialized pose estimation algorithms. The translation vector obtained from this process provides the marker's position in three-dimensional space, represented by coordinates (*X, Y, Z*)*.*

This can be determined as, given a 3D point (*X, Y, Z*) in the camera coordinate system, project (through a projection matrix K) it onto the 2D image plane (*u, v*) using the camera intrinsic parameters: focal lengths *fx, fy* and principal point coordinates *cx, cy .* $K = \left[\begin{matrix}fx & cx & cy \\ 0 & fy & 0 \\ 0 & 0 & 1\end{matrix}\right]$ $u = \left[\frac{{f}_{x} ⋅ X}{Z}+{c}_{x}\right]$ $v = \left[\frac{{f}_{y} ⋅ Y}{Z}+{c}_{y}\right]$ Once the 2D pixel coordinates (*u, v*) corresponding to the 3D point (*X, Y, Z*) are obtained, extract the predicted *D_{pred}* from the depth map at that pixel ${D}_{pred} = \left[Depth_Map\left(u, v\right)\right]$ Using the marker's pose estimation, obtain the translation vector *tvec =* (*X, Y, Z*)) which represents the 3D position of the marker's center relative to the camera. Compute the ground-truth distance *D_{GT}* as the Euclidean norm of the translation vector: ${D}_{GT} = \sqrt{{X}^{2} + {Y}^{2} + {Z}^{2}}$ Assume a linear relationship between the predicted depth and the ground-truth depth ${y}_{i} = a ⋅ {x}_{i} + b$ Were:
a is the scale factor.
b is the offset (bias).

Thereafter this is optimized to minimize the total absolute differences between the ground-truth depths and the scaled predicted depths. The optimization problem may be defined as ${min}_{a , b} {\sum }_{i = 1}^{N} \left|{y}_{i}-\left(a⋅{x}_{i}+b\right)\right|$

This optimization provides robustness against outliers. Thereafter for example using a RANSAC algorithm, we determine the best-fitting a and b that are robust to outliers $a , b = RANSAC \left({\left\{\left({x}_{i}, {y}_{i}\right)\right\}}_{i = 1}^{N}\right)$

The metric depth D_{metric} for a pixel p can then easily be determined as ${D}_{metric} \left(p\right) = a ⋅ {D}_{pred} \left(p\right) + b$

Figure 6A shows a flowchart for a general method according to herein. The method is for use in a robotic lawnmower as in figure 1 in a manner as discussed above in relation to figures 2, 3, 4A, 4B and 5, namely for use in a robotic lawnmower system comprising a robotic lawnmower 100 arranged to operate in an outdoor operational area 205. The method comprises a controller of the robotic lawnmower 100 receiving 601 a capture C1, determining 602 a scale-consistent depth map through applying 603 a depth map model on the first capture, wherein the depth map model has been trained on a loss function, wherein the loss function involves a photometric Loss, L_{photometric}, which measures the photometric consistency between images, a geometry loss, L_{geometry}, which ensures geometric consistency between different viewpoints, and a smoothness loss, Lₛₘₒₒₜₕₙₑₛₛ, which enforces smoothness in depth or disparity prediction, wherein the total loss is L_{photometric} + L_{geometry} and optionally + Lₛₘₒₒₜₕₙₑₛₛ. In some embodiments, the method further comprises determining 604 a metric depth map based on the capture (C1), where the metric depth map is determined by determining 605 a scale through calibration and applying 606 the scale to the scale-consistent depth map.

Figure 6B shows a flowchart for a general method according to herein. The method is for training of software, such as the AI model, to be used in a robotic lawnmower as in figure 1 in a manner as discussed above in relation to figures 2, 3, 4A, 4B and 5, namely for use in a robotic lawnmower system comprising a robotic lawnmower 100 arranged to operate in an outdoor operational area 205. The training may be made in a server at a manufacturer, such as in the server 240 in figure 2. The method comprises a controller of the server receiving 610 a first capture C1 at a first time T1 and a first pose P1 and receiving 620 a second capture C2 at a second time T2 and a second pose P2. The method also comprises determining 615 a first depth map D1 for the first capture C1 and determining 625 a second depth map D2 for the second capture C2, and then determining 630 a difference in positions/poses and then determining 640 a loss based on the first depth map D1, the second depth map D2, and the difference in poses, wherein wherein the loss function involves a photometric Loss, L_{photometric}, which measures the photometric consistency between images, a geometry loss, L_{geometry}, which ensures geometric consistency between different viewpoints, and optionally a smoothness loss, Lₛₘₒₒₜₕₙₑₛₛ, which enforces smoothness in depth or disparity prediction, wherein the total loss is L_{photometric} + L_{geometry} + Lₛₘₒₒₜₕₙₑₛₛ.

It should be noted that each on their own, these losses are known in the prior art, but never in this new, and insightful, combination, wherefore details are not really needed, however some such examples are given in the above.

## Claims

1. A robotic lawnmower system comprising a robotic lawnmower (100) arranged to operate in an outdoor operational area (205), and the robotic lawnmower comprising a mono camera (185), a controller (110), a memory (120) a mono camera (185), carrying computer-readable instructions that when loaded into and executed by the controller (110) configures the controller (110) to
receive a capture through the mono camera (185),
determine a scale-consistent depth map through applying a depth map model on the first capture, wherein the depth map model has been trained on a loss function, wherein the loss function involves
a photometric Loss, L_{photometric}, which measures the photometric consistency between images,
a geometry loss, L_{geometry}, which ensures geometric consistency between different viewpoints, and
a smoothness loss, Lₛₘₒₒₜₕₙₑₛₛ, which enforces smoothness in depth or disparity prediction, wherein
the total loss is L_{photometric} + L_{geometry} + Lₛₘₒₒₜₕₙₑₛₛ.

2. The robotic lawnmower system (200) according to claim 1, wherein the total loss is determined as ${L}_{total} = α ⋅ {L}_{photometric} + β ⋅ {L}_{smoothness} + γ ⋅ {L}_{geometry}$ where the weights α, β, γ are set during training.

3. The robotic lawnmower system (200) according to claim 1 or 2, wherein the photometric Loss, L_{photometric}, is implemented using L1 loss or structural similarity SSIM.

4. The robotic lawnmower system (200) according to any preceding claim, wherein the controller is further configured to determine a metric depth map based on the capture, where the metric depth map is determined by
determining a scale through calibration and
applying the scale to the scale-consistent depth map, wherein the controller is further configured to determine the scale by
registering a marker in the capture (C1, C2), the marker having a known dimension,
estimating the marker's rotation and translation relative to the camera (185),
obtaining a translation vector *tvec =* (*X, Y, Z*) based on the marker's pose estimation, which represents the 3D position of the marker's center relative to the camera,
determining a ground-truth distance *D_{GT}* as the Euclidean norm of the translation vector: ${D}_{GT} = \sqrt{{X}^{2} + {Y}^{2} + {Z}^{2}}$
assuming a linear relationship between the predicted depth and the ground-truth depth ${y}_{i} = a ⋅ {x}_{i} + b$ were: a is a scale factor and b is an offset,
and then
optimizing to minimize the total absolute differences between the ground-truth depths and the scaled predicted depths: ${min}_{a , b} {\sum }_{i = 1}^{N} \left|{y}_{i}-\left(a⋅{x}_{i}+b\right)\right|$
whereby the metric depth D_{metric} for a pixel p is determined as $\begin{matrix}{D}_{metric} \left(p\right) = a ⋅ {D}_{pred} \left(p\right) + b . \\ .\end{matrix}$

5. The robotic lawnmower system (200) according to claim 4, wherein the controller is further configured to determine the best-fitting a and b that are robust to outliers as $a , b = RANSAC \left({\left\{\left({x}_{i}, {y}_{i}\right)\right\}}_{i = 1}^{N}\right)$

6. The robotic lawnmower system (200) according to any preceding claim, wherein the capture (C1) is received as one or more frames in a videostream.

7. The robotic lawnmower system (200) according to any of claims 4 to 6, wherein the marker is an ArUco marker.

8. The robotic lawnmower system (200) according to any of claims 4 to 7, wherein the marker (340) is provided on a charging station of the robotic lawnmower system (200).

9. A method for use in a robotic lawnmower system comprising a robotic lawnmower (100), a mono camera (185), and wherein the method comprises
receiving a capture (C1),
determining a scale-consistent depth map through applying a depth map model on the first capture, wherein the depth map model has been trained on a loss function, wherein the loss function involves
a photometric Loss, L_{photometric}, which measures the photometric consistency between images and
a geometry loss, L_{geometry}, which ensures geometric consistency between different viewpoints, and
a smoothness loss, Lₛₘₒₒₜₕₙₑₛₛ, which enforces smoothness in depth or disparity prediction, wherein
the total loss is L_{photometric} + L_{geometry} + Lₛₘₒₒₜₕₙₑₛₛ.

10. The method according to claim 9, wherein the method further comprises determining a metric depth map based on the capture (C1), where the metric depth map is determined by
determining a scale through calibration and
applying the scale to the scale-consistent depth map wherein the method comprises determining the scale by
registering a marker in the capture (C1, C2), the marker having a known dimension,
estimating the marker's rotation and translation relative to the camera (185),
obtaining a translation vector *tvec =* (*X, Y, Z*) based on the marker's pose estimation, which represents the 3D position of the marker's center relative to the camera,
determining a ground-truth distance *D_{GT}* as the Euclidean norm of the translation vector: ${D}_{GT} = \sqrt{{X}^{2} + {Y}^{2} + {Z}^{2}}$
assuming a linear relationship between the predicted depth and the ground-truth depth ${y}_{i} = a ⋅ {x}_{i} + b$ were: a is a scale factor and b is an offset,
and then
optimizing to minimize the total absolute differences between the ground-truth depths and the scaled predicted depths: ${min}_{a , b} {\sum }_{i = 1}^{N} \left|{y}_{i}-\left(a⋅{x}_{i}+b\right)\right|$
whereby the metric depth D_{metric} for a pixel p is determined as ${D}_{metric} \left(p\right) = a ⋅ {D}_{pred} \left(p\right) + b .$

11. A computer-readable medium carrying computer instructions that when loaded into and executed by a controller of a robotic lawnmower enables the robotic lawnmower to implement the method according to claim 9 or 10.

12. A method for training a depth map model to provide a scale-consistent depth map for use in a robotic lawnmower system comprising a robotic lawnmower (100) having a mono camera (185), and wherein the method comprises
receiving a first capture (C1) at a first time (T1) and a first pose (P1),
receiving a second capture (C2) at a second time (T2) and a second pose (P2),
determining a first depth map (D1) for the first capture (C1),
determining a second depth map (D2) for the second capture (C2),
determining a difference in positions/poses and then
determining a loss based on the first depth map (D1), the second depth map (D2), and the difference in poses, wherein wherein the loss function involves
a photometric Loss, L_{photometric}, which measures the photometric consistency between images and
a geometry loss, L_{geometry}, which ensures geometric consistency between different viewpoints,
a smoothness loss, Lₛₘₒₒₜₕₙₑₛₛ, which enforces smoothness in depth or disparity prediction, wherein
the total loss is L_{photometric} + L_{geometry} + Lₛₘₒₒₜₕₙₑₛₛ.
